# EUROPÄISCHE PATENTANMELDUNG

(11) **EP 1 352 784 A2**
(43) Veröffentlichungstag der Anmeldung: **15.10.2003**
(21) Anmeldenummer: 03004942.3
(22) Anmeldetag: 10.03.2003
(51) Int. Cl.: B60R 11/02

(54) **Vorrichtung und Verfahren zur Sichteinschränkung des Fahrers auf Anzeigeeinrichtungen**

(30) Priorität: 04.04.2002 DE 10214789
(71) Anmelder: Volkswagen Aktiengesellschaft, 38436 Wolfsburg (DE)
(72) Erfinder: Krüger, Jens, 38524 Sassenburg (DE)

(57) **Zusammenfassung**

Vorrichtung zur Einstellung einer Anzeigeeinrichtung in einem Kraftfahrzeug, umfassend mindestens einen Bildschirm (1) zur Wiedergabe von Informations- und/oder Unterhaltungsmedien, wobei der Vorrichtung mindestens eine Stelleinrichtung (11, 12, 13) zur Sichteinschränkung des Fahrzeugführers (2) zugeordnet ist, mittels derer mindestens in Abhängigkeit einer Fahrsituation und/oder Wiedergabesituation die Sicht des Fahrzeugführers (2) auf den Bildschirm (1) veränderbar ist.

## Beschreibung

Die Erfindung betrifft eine Vorrichtung und ein Verfahren zur Einschränkung der Sicht eines Fahrzeugführers auf eine Anzeigeeinrichtung.

In Fahrzeugen werden immer mehr Multifunktionsbedieneinrichtungen mit Anzeigeeinrichtungen zur Wiedergabe von sowohl Fahrerinformationen als auch andere Informationsangebote eingesetzt.

Fahrerinformationen sind beispielsweise eine Kartendarstellung der aktuellen Position in Navigationssystemen oder textorientierte Informationen wie Radiosender, RDS oder CD-Wechsler-Bedienungsanweisungen. Das Informations- und Unterhaltungsangebot umfasst beispielsweise TV-, Video- und/oder Internetoptionen. Dabei ist es gewünscht, dass der Fahrer auch während der Fahrt auf die unterstützende Fahrerinformation zugreifen kann. Dagegen führt das weitere Informations- bzw. Unterhaltungsangebot zu einer gefährliche Ablenkung des Fahrers, welche zum Teil auch durch nationale Gesetzgebungen verboten ist. Es ist daher bekannt, ab Überschreiten eines vorgegebenen Schwellwertes, beispielsweise einer Überschreitung der Schrittgeschwindigkeit von 6 km/h, die Wiedergabe zumindest des Unterhaltungsangebotes zu unterdrücken. Ein Mitreisender kann jedoch dann das Unterhaltungsangebot ebenfalls nicht nutzen.

Aus der DE 42 13 129 C2 ist ein Fahrerinformationssystem mit einem Bildschirm in einem Kraftfahrzeug zur Wiedergabe von Verkehrsinformationen bekannt, wobei der Bildschirm im Sichtbereich eines Fahrers angeordnet ist, und wobei der Bildschirm schwenkbar ausgeführt ist und aus einer ersten Stellung aus dem Sichtbereich des Fahrers in eine zweite Stellung in den Sichtbereich wenigstens eines Mitfahrers schwenkbar ist, wobei über einen mechanisch betätigbaren Umschalter eine Umschaltung von der Wiedergabefunktion "Verkehrsinformationen" auf die Wiedergabefunktion "TV-Unterhaltung" erfolgt und der Umschalter als Endschalter im Schwenkbereich des Bildschirms liegt und bei einem Verschwenken betätigt und so angesteuert wird, dass in der ersten Stellung des Bildschirms im Sichtbereich des Fahrers ausschließlich auf die Wiedergabefunktion "Verkehrsinformationen" umgeschaltet wird. Bei abgeschalteter Zündung und/oder Leerlaufbetrieb ist der Umschalter überbrückbar. So sind beispielsweise in einem Verkehrsstau das Unterhaltungs- und Informationsangebot sowohl der Fahrer als auch dem Mitreisenden zugänglich. Bei Auflösung des Verkehrstaus und einer damit einhergehenden Veränderung der Fahrsituation erfolgt eine Umschaltung auf "Verkehrsinformationen". Will der Mitreisende das Unterhaltungs- und Informationsangebot weiter nutzen, so muss der Bildschirm in die zweite Stellung umgeschwenkt werden. Eine derartige Vorrichtung erfüllt nicht die Anforderungen, welche an den Bedienungskomfort moderner Techniken gestellt werden.

Der Erfindung liegt daher das technische Problem zugrunde, ein Verfahren und eine Vorrichtung zu schaffen, welche die Sicht eines Fahrzeugführers auf eine Anzeigeeinrichtung bei einer die Fahrsicherheit gefährdenden Wiedergabe- und/oder Fahrsituation verhindert und gleichzeitig einem Mitreisenden das Unterhaltungs- und Informationsangebot uneingeschränkt zur Verfügung stellt.

Die Lösung des Problems ergibt sich durch Gegenstände mit den Merkmalen der Ansprüche 1 und 12. Weitere vorteilhafte Ausgestaltungen der Erfindung ergeben sich aus den Unteransprüchen.

Hierzu ist der Anzeigeeinrichtung eine Stelleinrichtung zugeordnet, mittels derer in Abhängigkeit einer Fahrsituation und/oder Wiedergabesituation die Sicht des Fahrzeugführers auf den Bildschirm veränderbar ist. Durch eine derartige Vorrichtung ist die Sicht des Fahrzeugführers situations- und/oder geschwindigkeitsabhängig regulierbar, ohne dass dafür eine Interaktion des Fahrers und/oder eines Mitreisenden erforderlich ist. Durch geeignete Sensoreinrichtungen, beispielsweise des Drehzahlmessers und/oder des Tachometers zur Ermittlung der Fahrzeuggeschwindigkeit, ist die Fahrsituation ermittelbar. Die Wiedergabesituation ist entweder direkt aufgrund einer gewählten Anwendung oder aus Informationen des Steuergeräts des Bildschirms ablesbar. Aufgrund der Fahrsituation und/oder Wiedergabesituation sind elektrische Stellsignale für eine Steuerung der Stelleinrichtung ermittelbar. Eine automatische Anpassung der Sicht des Fahrzeugführers auf die Infotainmentanzeige erhöht die Fahrsicherheit ohne dass ein Mitreisender in der Nutzung des Unterhaltungsangebotes beeinträchtigt wird.

In einer bevorzugten Ausführungsform sind durch die Stelleinrichtung zwei Blickwinkelbereiche des Bildschirm einstellbar, wobei der erste Blickwinkelbereich mindestens die Position des Fahrers umfasst und der zweite Bereich mindestens die Position des Fahrer ausschließt. Der Blickwinkelbereich beschreibt den maximalen Winkel, bezogen auf die Normalebene des Bildschirms, unter dem ein Bild auf der Anzeigenfläche für einen Betrachter sichtbar ist. Durch ein Ausschließen der Fahrerposition aus dem Blickwinkelbereich ist diesem somit der Blick auf die Anzeigefläche verwehrt.

In einer weiteren Ausführungsform sind die Position des Fahrzeugführers und die Position mindestens eines Mitreisendens asymmetrisch bezüglich der Normalebene des Bildschirms angeordnet. Durch eine asymmetrische Anordnung der Positionen ist ein Ausschließen des Fahrers aus einem Blickwinkelbereich ohne Beeinträchtigung des Mitreisenden durch eine Veränderung des Blickwinkelbereichs möglich, ohne dass hierfür eine Bewegung des Bildschirms notwendig ist. Dadurch ist eine einfache konstruktive Umsetzbarkeit gegeben.

In einer bevorzugten Ausführungsform ist der Bildschirm als Flüssigkristallbildschirm mit veränderbarem Blickwinkelbereich ausgebildet. Vorzugsweise werden zu diesem Zweck Aktivmatrix-Flüssigkristallbildschirme, sogenannte TFT-LCDs, eingesetzt. Bei derartigen Flüssigkristallbildschirmen ist das austretende Licht stark gerichtet, so dass der Blickwinkel im allgemeinen auf einen Bereich von 45° bis 80° begrenzt ist. Für eine Veränderung es Blickwinkels können beispielsweise elektrisch ansteuerbare polymerdispersierte Flüssigkristalle (Polymer Dispersed Liquid Crystal PDLC) in dem TFT-LC Display integriert werden. Durch eine elektrisch steuerbare Veränderung der Orientierung der PDLC ist die Intensität des Durchlichts und damit der Blickwinkelbereich des Bildschirms variierbar.

Anstelle dieser Ausführungsform ist auch eine Regelung der Hintergrundlichtquelle für eine Variation des Blickwinkelbereichs denkbar. Eine Reduzierung der Hintergrundbeleuchtung wirkt sich jedoch allgemein negativ auf die Helligkeit des Bildschirms aus. Daneben ist auch der Einsatz von Dual-Domain TFT-LCDs möglich, wobei einzelne Zellen elektrisch getrennt ansteuerbar sind.

In einer weiteren Ausführungsform ist der Bildschirm mit einem Filter ausgebildet ist, wobei durch den Filter der Blickwinkelbereich einschränkbar. Der vor dem Bildschirm angeordnete Filter kann dabei als Flüssigkeitskristallfilter ausgebildet sein, welcher durch elektrische Stellsignale angesteuert wird.

In einer weiteren Ausführungsform ist der Bildschirm schwenkbar ausgebildet ist und die Orientierung des Bildschirms durch Schalter und/oder Sensoren ermittelbar. Durch die Stelleinrichtung wird der Bildschirm bei einer Wiedergabe von Bewegtbildern und Überschreiten der Schrittgeschwindigkeit aus dem Sichtbereich des Fahrers geschwenkt. Auf Wunsch des Mitreisenden und/oder des Fahrers ist eine Wiedergabe des Unterhaltungsprogramms zugunsten der Fahrerinformationen unterdrückbar. In dieser gewünschten Wiedergabesituation ist eine Stellung des Bildschirms im Sichtbereich des Fahrers zulässig. Durch geeignete Sensorik ist sichergestellt, dass die Stellung des Bildschirms erfasst wird. Im Sichtbereich des Fahrers ist damit eine Darstellung von Bewegtbildern verhinderbar.

In einer weiteren Ausführungsform ist die Sichteinschränkung mit einem mechanischen Sichtschutz ausgebildet. Die Vorrichtung ist in der Funktionsweise ähnlich der schwenkbaren Ausführung. Ist die Anzeigeeinrichtung zur Wiedergabe des Informationsund Unterhaltungsangebotes genutzt, so wird eine Sicht des Fahrers auf den Bildschirm ab Überschreiten eines Schwellwertes durch den mechanischen Sichtschutz verhindert. Durch geeignete Sensorik ist die Position des mechanischen Sichtschutzes erfassbar. Dadurch ist sichergestellt, dass eine Darstellung von Bewegtbildern ohne ausgefahrenen Sichtschutz bei Überschreiten der Schrittgeschwindigkeit unterdrückt wird.

In einer bevorzugten Ausführungsform ist die Stelleinrichtung mit einem Crash-Sensor gekoppelt. Durch den Crash-Sensor ist der Verzögerungsverlauf in einem Unfall messbar. Daraus ist ein Stellsignal ermittelbar, so dass bei einem sicherheitskritischen Unfall eine Bewegung des Sichtschutzes und/oder des Bildschirms in einen sicheren Bereich erfolgt. Durch diese Maßnahmen ist ein Verletzungsrisiko bei Unfällen reduzierbar. Daneben ist es auch denkbar, das Verletzungsrisiko durch konstruktive Maßnahmen und/oder Montage des Bildschirms in einem ungefährdeten Bereich zu verringern.

In einer weiteren Ausführungsform ist er Bildschirm derart ausgebildet, dass in verschiedenen Bildbereichen unterschiedliche Bilder darstellbar sind. Dabei ist eine Ausführung des Bildschirms als Flüssigkristallanzeige denkbar, deren Bildpunkte gleichartig in verschiedenen Bereiche unterteilt und getrennt elektrisch ansteuerbar sind. Die Bereiche unterscheiden sich in der Ausrichtung des Flüssigkristalls. Dadurch können in verschiedenen Blickwinkelbereichen gleichzeitig unterschiedliche Bilder angezeigt werden. Liegen die Positionen des Fahrers und des Mitreisenden in unterschiedlichen Bildbereichen, so ist eine gleichzeitige Wiedergabe eines Standbilds im Bildbereich des Fahrers und von Bewegtbildern im Bildbereich des Mitreisenden möglich.

In einer weiteren Ausführungsform ist der mindestens eine Mitreisende durch geeignete Sensorik detektierbar. Hierbei ist bevorzugt der Sitzbelegungssensor des Beifahrer-Airbags eingesetzt. Eine Variation des Blickwinkelbereichs erfolgt nur, wenn das Unterhaltungsangebot durch mindestens einen Mitreisenden weiter genutzt werden soll. Wird kein Mitreisender detektiert, so werden in Abhängigkeit der Fahrsituation die Bewegtbilder durch Standbilder ersetzt.

Die Erfindung ist nachfolgend anhand von Ausführungsbeispielen beschrieben. Die Figuren zeigen:
- Fig.1:: eine Sichteinschränkung durch Blickwinkelumschaltung bei asymmetrischer Bildschirmanordnung,
- Fig. 2:: eine Sichteinschränkung durch Blickwinkelumschaltung mit einem schwenkbaren Bildschirm und
- Fig. 3:: eine Sichteinschränkung durch einen mechanischen Sichtschutz.

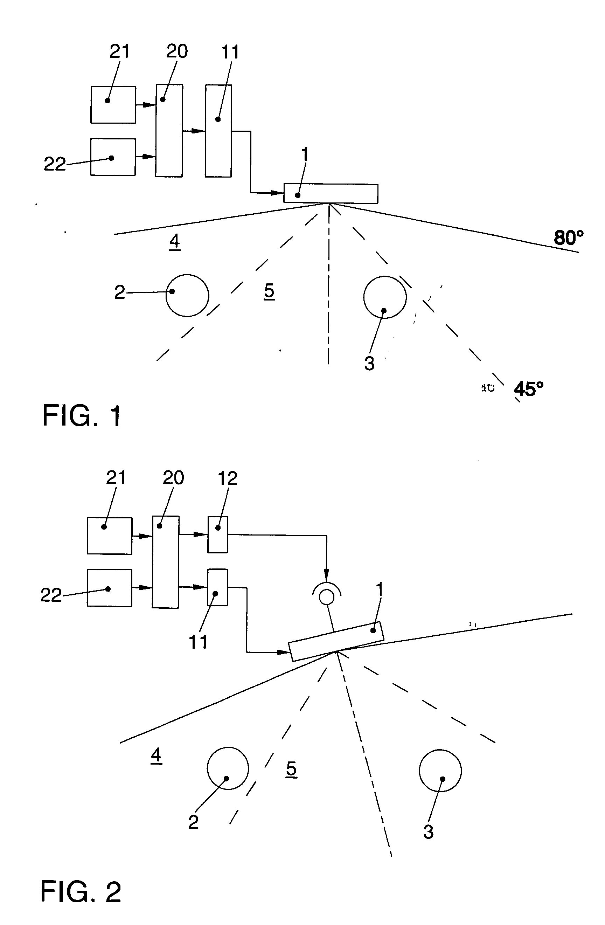

Fig. 1 zeigt eine asymmetrische Anordnung eines Bildschirms 1 bezüglich der Position eines Fahrers 2 und eines Beifahrers 3. Der Blickwinkelbereich 4, 5 ist durch eine Stelleinrichtung 11 variierbar. Der Bildschirm 1 ist als TFT-LCD ausgebildet. Durch die Stelleinrichtung 11 wird ein im Bildschirm 1 integrierter PDLC angesteuert. Daneben ist auch eine Ausführung mit einem vor dem Bildschirm 1 angeordneten, ansteuerbaren Flüssigkristallfilter denkbar. Der erste Blickwinkelbereich 4, beispielsweise gegeben durch einem maximalen Blickwinkel von 80°, umfasst sowohl die Position des Fahrers 2 als auch die des Beifahrers 3. Der zweite Blickwinkelbereich, beispielsweise gegeben durch den maximalen Blickwinkel von 45°, umfasst nur die Position des Beifahrers 3. Die Wahl des Blickwinkelbereichs erfolgt aufgrund eines der Stelleinrichtung 11 zugeführten Stellsignals. Durch eine Sensoreinheit 21, beispielsweise eines Tachometers zur Erfassung der Fahrzeuggeschwindigkeit, ist eine Fahrsituation ermittelbar. In einer Einheit 22 ist die Wiedergabesituation, beispielsweise aufgrund des gewählten Wiedergabeangebotes, bestimmbar. Die Signale der Einheiten 21 und 22 sind einer Recheneinheit 20 zugeführt. In der Recheneinheit 20 ist aufgrund dieser Signale, welche die Fahr- und Wiedergabesituation anzeigen, das elektrische Stellsignal für die Wahl des Blickwinkelbereichs ermittelbar.

Eine Erhöhung der Sicherheit ist durch eine Ausführung mit mindestens zwei unabhängigen Sichteinschränkungsvorrichtung möglich. Fig. 2 zeigt eine Kombination des in Fig. 1 dargestellten Bildschirms 1 mit integriertem PDLC zur Veränderung des Blickwinkelbereichs mit der Stelleinrichtung 11 und einer Stelleinrichtung 12 für ein Schwenken des Bildschirms 1. Die Bezeichnungen entsprechen dabei Fig. 1. Die Fahrund Wiedergabesituation sind durch die Einheiten 21, 22 ermittelbar und der Recheneinheit 20 zugeführt. In der Recheneinheit 20 ist ein Stellsignal für die Bewegung des Bildschirms durch die Stelleinrichtung 12 und die Variation des Blickwinkels durch die Stelleinrichtung 11 ermittelbar. Eine Kombination verschiedener Stelleinrichtungen kann aufgrund konstruktiver Beschränkungen vorteilhaft sein. So ist durch den schwenkbar ausgeführten Bildschirm 1 eine symmetrische Anordnung des Fahrers und des Beifahrers bezüglich der Normalebene des Bildschirms 1 möglich. Gleichzeitig ist der notwendige Schwenkbereich bei einer Kombination der Stelleinrichtung 12 mit der Stelleinrichtung 11 geringer als bei einer Ausführungsform, welche eine reine Bewegung des Bildschirms 1 vorsieht. Eine Kombination verschiedener Stelleinrichtung erhöht auch die Sicherheit, da bei Ausfall einer Stelleinrichtung auf die weiteren Stelleinrichtungen zurückgegriffen werden kann.

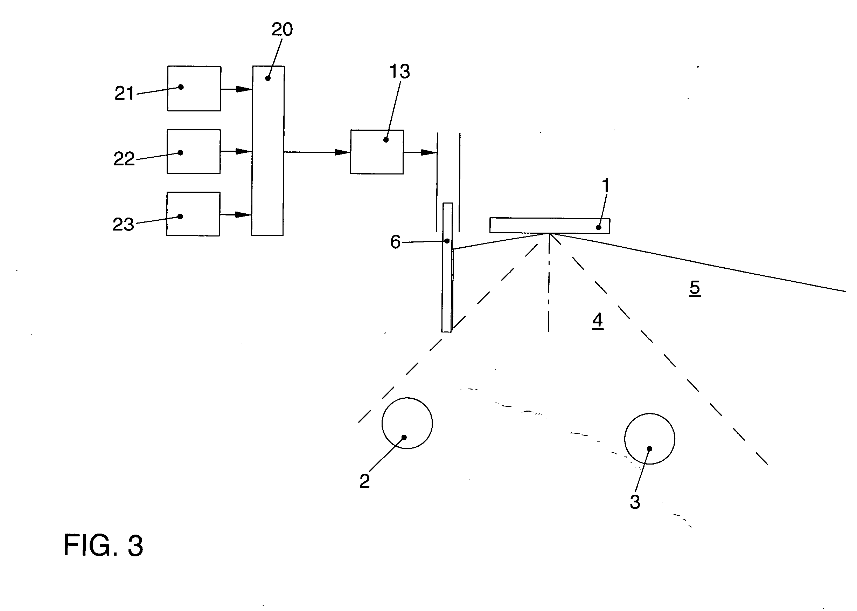

Fig. 3 zeigt eine Sichteinschränkung des Fahrers 2 auf den Bildschirm 1 unter Verwendung eines mechanischen Sichtschutzes 6. Für Elemente, welche Fig. 1 entsprechen, sind dabei gleiche Bezugszeichen verwendet. Aus der in den Einheiten 21, 22 ermittelten Fahr- und Wiedergabesituation ist in der Recheneinheit 20 ein Stellsignal ermittelbar. Das Stellsignal ist einer Stelleinrichtung 13 für die Bewegung des mechanischen Sichtschutzes 6 zugeführt. Zusätzlich umfasst die Vorrichtung einen Crash-Sensor 23. Das Signal des Crash-Sensors 23 ist ebenfalls der Recheneinheit 20 zugeführt. Durch den Crash-Sensor 23 ist der Verzögerungsverlauf eines Unfalls messbar. Dadurch ist in sicherheitskritischen Situationen ein Befehl an die Stelleinrichtung 13 generierbar, den Sichtschutz 6 in einen sicheren Bereich einzufahren.

Umfasst die Infotainmenteinrichtung mehr als eine Anzeigefläche, so sind verschiedene Ausführungsformen denkbar. In einer Ausführungsform werden Fahrerinformation und Unterhaltungsangebote an zwei unterschiedlichen Anzeigeflächen ausgegeben. Die Informationsanzeige bleibt dem Fahrer in jeder Fahrsituation zugänglich. Für die Anzeigefläche des Unterhaltungsangebotes sind die in den Ausführungsformen genannten Maßnahmen treffbar.

Es ist auch denkbar, dem Fahrer und mindestens einem Mitreisenden getrennte Anzeigenflächen zuzuordnen. Die gewünschte Wiedergabe ist dabei von Fahrer und Mitreisendem unabhängig wählbar. Der Bildschirm des Mitreisenden ist dabei mindestens bei einer Wiedergabe des Unterhaltungsangebotes nicht durch den Fahrer einsehbar. Der Bildschirm des Fahrers schaltet in Anhängigkeit der Fahrsituation auf ein Standbild.

Bevorzugt werden in Kraftfahrzeugen TFT-LCDs eingesetzt, welche den Anforderungen gemäß der DIN 75001 entsprechen. Es ist aber auch ein Einsatz von FE-Bildschirmen (Field Emission) oder organischen Bildschirmen, sogenannten Polymerbildschirmen, denkbar.

## Patentansprüche

1. Vorrichtung zur Einstellung einer Anzeigeeinrichtung in einem Kraftfahrzeug, umfassend mindestens einen Bildschirm (1) zumindest zur Wiedergabe von Informations- und/oder Unterhaltungsmedien, wobei mindestens die Sicht des Fahrzeugführers (2) auf den Bildschirm (1) einschränkbar ist,
**dadurch gekennzeichnet, dass**
der Vorrichtung mindestens eine Stelleinrichtung (11, 12, 13) zur Sichteinschränkung des Fahrzeugführers (2) zugeordnet ist, mittels derer mindestens in Abhängigkeit einer Fahrsituation und/oder Wiedergabesituation die Sicht des Fahrzeugführers (2) auf den Bildschirm (1) veränderbar ist.

2. Vorrichtung nach Anspruch 1, **dadurch gekennzeichnet, dass** durch die Stelleinrichtung (11, 12, 13) mindestens zwei Blickwinkelbereiche (4, 5) des Bildschirms (1) einstellbar sind, wobei der erste Blickwinkelbereich (4) mindestens die Position des Fahrzeugführers (2) umfasst und der zweite Blickwinkelbereich (5) mindestens die Position des Fahrzeugführers (2) ausschließt.

3. Vorrichtung nach Anspruch 2, **dadurch gekennzeichnet, dass** die Position des Fahrzeugführers (2) und mindestens eines Mitfahrers (3) asymmetrisch bezüglich der Normalebene des Bildschirms (1) angeordnet sind.

4. Vorrichtung nach Anspruch 2 oder 3, **dadurch gekennzeichnet, dass** der Bildschirm (1) als Flüssigkristallbildschirm mit veränderbarem Blickwinkelbereich (4, 5) ausgebildet ist.

5. Vorrichtung nach einem der vorangegangenen Ansprüche, **dadurch gekennzeichnet, dass** der Bildschirm (1) mit einem Filter ausgebildet ist, wobei durch den Filter der Blickwinkelbereich (4, 5) einschränkbar ist.

6. Vorrichtung nach einem der vorangegangen Ansprüche, **dadurch gekennzeichnet, dass** der Bildschirm (1) schwenkbar ausgebildet ist und die Orientierung des Bildschirms durch Schalter und/oder Sensoren ermittelbar ist.

7. Vorrichtung nach einem der vorangegangen Ansprüche, **dadurch gekennzeichnet, dass** die Sichteinschränkung einen mechanischen Sichtschutz (6) umfasst.

8. Vorrichtung nach einem der vorangegangen Ansprüche, **dadurch gekennzeichnet, dass** der Stelleinrichtung mindestens ein Crash-Sensor (23) zugeordnet ist, durch welchen ein Unfall detektierbar ist.

9. Vorrichtung nach einem der vorangegangen Ansprüche, **dadurch gekennzeichnet, dass** der Bildschirm (1) derart ausgebildet ist, dass in verschiedenen Blickwinkelbereichen (4, 5) unterschiedliche Bilder darstellbar sind.

10. Vorrichtung nach einem der vorangegangen Ansprüche, **dadurch gekennzeichnet, dass** die Anwesenheit eines Mitreisenden durch mindestens einen Sensor detektierbar ist.

11. Vorrichtung nach Anspruch 10, **dadurch gekennzeichnet, dass** der Sensor als Sitzbelegungssensor ausgebildet ist.

12. Verfahren zur Einstellung einer Anzeigeeinrichtung in einem Kraftfahrzeug, umfassend mindestens einen Bildschirm (1) zumindest zur Wiedergabe von Informations- und/oder Unterhaltungsmedien, wobei
eine Fahrsituation und/oder eine Wiedergabesituation ermittelt werden, mindestens ein Stellsignal für mindestes eine Stelleinrichtung (11, 12, 13) zur Sichteinschränkung des Fahrzeugführers (2) aufgrund der Fahr- und/oder Wiedergabesituation generiert wird,
die Sicht des Fahrzeugführers (2) auf den Bildschirm (1) aufgrund des Stellsignals durch die Stelleinrichtung (11, 12, 13) verändert wird.
